**Europäisches Patentamt**

**European Patent Office**

**Office européen des brevets**

(19)

(11) Veröffentlichungsnummer : **0 306 718 B1**

(12) # EUROPÄISCHE PATENTSCHRIFT

(45) Veröffentlichungstag der Patentschrift :
**18.09.91 Patentblatt 91/38**

(51) Int. Cl.⁵ : **B60T 11/06**

(21) Anmeldenummer : **88112953.0**

(22) Anmeldetag : **10.08.88**

(54) **Bremsanlage.**

(30) Priorität : **13.08.87 DE 3726935**

(43) Veröffentlichungstag der Anmeldung :
**15.03.89 Patentblatt 89/11**

(45) Bekanntmachung des Hinweises auf die
Patenterteilung :
**18.09.91 Patentblatt 91/38**

(84) Benannte Vertragsstaaten :
**DE FR GB IT**

(56) Entgegenhaltungen :
**DE-A- 2 166 831**
**DE-B- 2 325 539**
**GB-A- 2 085 993**

(73) Patentinhaber : **Bergische Achsenfabrik Fr.**
**Kotz & Söhne**
**Am Ohlerhammer**
**W-5276 Wiehl 1 (DE)**

(72) Erfinder : **Johanns, Karl Heinz**
**Gaderoth**
**W-5223 Nümbrecht (DE)**

(74) Vertreter : **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11 (DE)**

EP 0 306 718 B1

Jouve, 18, rue Saint-Denis, 75001 PARIS

## Beschreibung

Gegenstand der Erfindung ist eine Bremsanlage für Anhänger mit zwei Drehstab- oder Gummifederachsen und vier einzeln gefederten Rädern, wobei die Bremskraft von einer Auflaufeinrichtung ausgehend über ein Bremsgestänge, einen Ausgleichshebel und davon abzweigenden Bowdenzügen auf die Radbremsen übertragen wird.

Aus der DE-OS 2166831 ist eine Bremsanlage mit Übertragung der Bremskraft auf die Radbremsen mit Bowdenzügen bekannt. Zwischen dem Bremsgestänge und den Zugseilen der Bowdenzüge ist ein Bremskraftverteiler angeordnet, in dem waagebalkenartige Hebel für je zwei Zugseile gelagert sind, während die Schläuche aller vier Bowdenzüge am Fahrgestell bzw. einem Achsrohr abgestützt sind. Diese bekannte Bremsanlage hat sich zwar in der Praxis bewährt, ist aber durch den Bremskraftverteiler und die darin angeordneten Hebel sehr aufwendig.

Davon ausgehend liegt der Erfindung die **Aufgabe** zugrunde, eine Bremsanlage für Anhänger mit vier einzeln gefederten Rädern mit einer einfacher konstruierten Übertragung der Bremskraft durch Bowdenzüge zu schaffen.

Als technische **Lösung** dieser Aufgabe wird vorgeschlagen, daß

a)   die vier Bowdenzüge diagonal über ihre Zugseile miteinander verbunden sind,
b)   am Ende des Bremsgestänges ein zweiarmiger Ausgleichshebel gelagert ist und
c)   die Schläuche der beiden Bowdenzüge für die Radbremsen einer Achse an dem Ausgleichshebel und die Schläuche der beiden Bowdenzüge für die Radbremsen der anderen Achse am Fahrgestell abgestützt sind.

Eine nach dieser technischen Lehre ausgebildete Bremsanlage hat den **Vorteil** einer besonders einfachen und wirksamen Konstruktion, weil sie ohne einen Bremskraftverteiler auskommt und deshalb die von der Auflaufeinrichtung eingeleiteten Bremskräfte ohne Verluste unmittelbar auf die Radbremsen überträgt.

Bei einer praktischen Ausführungsform können zwischen den Enden der Zugseile der vier Bowdenzüge Spanner zum Einstellen der Vorspannung bzw. des Bremsspieles angeordnet sein. Dabei besteht jeder Spanner zweckmäßig aus mit den Zugseilen verbundenen Gewindezapfen und damit zusammenwirkenden Spannschrauben mit Rechts- und Linksgewinde. Mittels eines Spanners können theoretisch alle vier Radbremsen eingestellt werden, aber in der täglichen Praxis werden natürlich besser beide Spanner parallel zueinander eingestellt damit der Ausgleichshebel möglichst im rechten Winkel zum Bremsgestänge verläuft.

Weiterhin kann bei einer praktischen Ausführungsform die Abstützung der Schläuche am Fahrgestell aus einem auf der Achse befestigten Halter bestehen, der gleichzeitig eine Führung für das Bremsgestänge hat. Anstelle eines Bremsgestänges kann natürlich auch ein Bowdenzug für die Übertragung der Bremskraft von der Auflaufeinrichtung zum Ausgleichshebel verwendet werden. In diesem Falle wird in Verlängerung des Bowdenzuges eine Führungsstange angebracht, die mit der Führung des Halters zusammenwirkt.

Weitere Einzelheiten und Vorteile ergeben sich aus der nachfolgenden Beschreibung der zugehörigen Zeichnungen, in denen eine bevorzugte Ausführungsform eine erfindungsgemäß ausgebildeten Bremsanlage dargestellt worden ist. In den Zeichnungen zeigen :

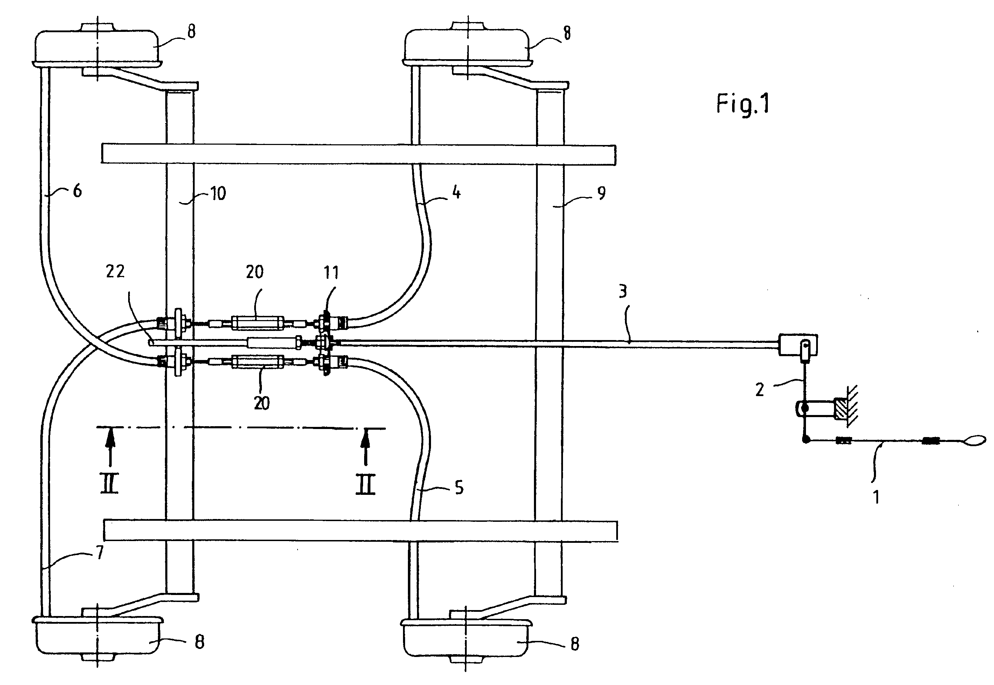

Fig.1   eine Bremsanlage für eine Tandemachse in Draufsicht ;
Fig.2   einen vergrößerten Ausschnitt derselben Bremsanlage entlang der Linie II-II in Fig. 1 geschnitten in Seitenansicht ;
Fig. 3   den vergrößerten Ausschnitt gemäß Fig. 2 in Draufsicht.

Ausgehend von einer Auflaufeinrichtung 1, die mit einem —nicht dargestellten — Zugfahrzeug gekuppelt werden kann, wird eine Bremskraft über einen Umlenkhebel 2 und ein Bremsgestänge 3 auf vier Bowdenzüge 4, 5, 6, 7 übertragen, die mit Radbremsen, beispielsweise Spreizhebelbremsen, in Bremstrommeln 8 der Räder von zwei Achsen 9, 10 verbunden sind. Die beiden Achsen 9, 10 können als Drehstab- oder Gummifederachsen ausgebildet sein.

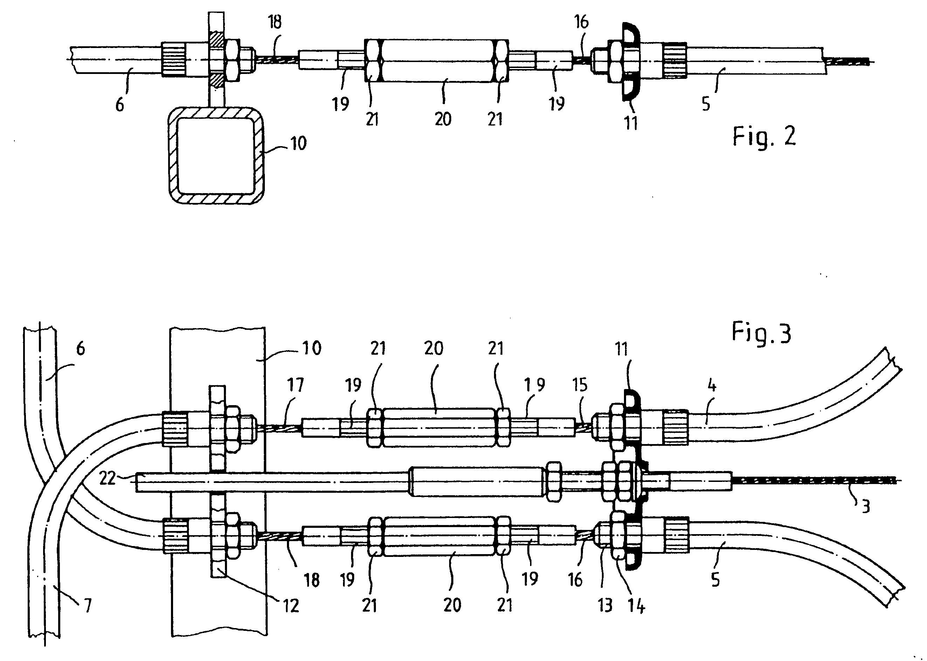

Am fahrgestellseitigen Ende des Bremsgestänges 3, welches in der Ausführungsform gemäß den Fig. 2 und 3 auch aus einem weiteren Bowdenzug bestehen kann, ist ein Ausgleichshebel 11 schwenkbar gelagert. An diesem Ausgleichshebel 11 ist auf jeder Seite ein Bowdenzug 4 bzw. 5 mit seinem Schlauch abgestützt. Die Schläuche der beiden anderen Bowdenzüge 6, 7 sind dagegen an einem Halter 12 abgestützt, der an der in Fahrtrichtung hinten liegenden Achse 10 befestigt ist. Die Enden der Schläuche aller vier Bowdenzüge 4, 5, 6 und 7 sind mit Gewindenippeln 13 versehen, so daß sie mit Muttern 14 am Ausgleichshebel 11 bzw. Halter 12 unverschiebbar befestigt werden können.

2

Die aus den Schläuchen der Bowdenzüge 4, 5, 6 und 7 herausragenden Zugseile 15, 16, 17 und 18 sind mit Gewindezapfen 19 verbunden, auf denen Spannschrauben 20 und Kontermuttern 21 angeordnet sind. Die Gewindezapfen 19, Spannschrauben 20 und Kontermuttern 21 haben wechselweise Rechts- und Linksgewinde, damit mit den Spannschrauben 20 eine Einstellung der Vorspannung bzw. des Bremsspieles an den Zugseilen 15, 16, 17 und 18 möglich ist.

Der an der Achse 10 befestigte Halter 12 ist gleichzeitig mit einer Führung für eine Führungsstange 22 am Ende des Bremsgestänges 3 versehen.

Die Bowdenzüge 4 und 7 sowie 5 und 6 sind diagonal über ihre Zugseile 15 und 17 sowie 16 und 18 miteinander verbunden, um einen Bremsausgleich auf den gegenüberliegenden Seiten des Anhängers zu ermöglichen.

Wenn die Auflaufeinrichtung 1 das Bremsgestänge 3 betätigt, wird der Ausgleichshebel 11 in Fahrtrichtung bewegt. Dabei werden gleichzeitig alle vier Radbremsen betätigt, weil der Ausgleichshebel 11 die Schläuche der beiden Bowdenzüge 4 und 5 relativ zu deren Zugseilen 15, 16 zu verschieben versucht und gleichzeitig an den Zugseilen 17, 18 der beiden hinteren Bowdenzüge 6, 7 zieht. Daraus resultiert eine gleichmäßige Zugspannung an allen vier Zugseilen 15, 16, 17 und 18.

## <u>B e z u g s z e i c h e n l i s t e</u>

| 1 | Auflaufeinrichtung |
|---|---|
| 2 | Umlenkhebel |
| 3 | Bremsgestänge |
| 4 | Bowdenzug |
| 5 | Bowdenzug |
| 6 | Bowdenzug |
| 7 | Bowdenzug |
| 8 | Bremstrommel |
| 9 | Achse |
| 10 | Achse |
| 11 | Ausgleichshebel |
| 12 | Halter |
| 13 | Gewindenippel |
| 14 | Mutter |
| 15 | Zugseil |
| 16 | Zugseil |
| 17 | Zugseil |
| 18 | Zugseil |
| 19 | Gewindezapfen |
| 20 | Spannschraube |
| 21 | Kontermutter |
| 22 | Führungsstange |

**Patentansprüche**

1. Bremsanlage für Anhänger mit zwei Drehstab- oder Gummifederachsen und vier einzeln gefederten Rädern, wobei die Bremskraft von einer Auflaufeinrichtung (1) ausgehenden über ein Bremsgestänge (3), einen Ausgleichshebel (11) und davon abzweigende Bowdenzügen (4, 5, 6, 7) auf die Radbremsen übertragen wird, **dadurch gekennzeichnet,**

   a)   daß die Bowdenzüge (4 und 7, 5 und 6) diagonal über ihre Zugseile (15 und 17, 16 und 18) miteinander verbunden sind,

   b)   daß am Ende des Bremsgestänges (3) ein zweiarmiger Ausgleichshebel (11) gelagert ist und

   c)   daß die Schläuche der beiden Bowdenzüge (4, 5) für die Radbremsen einer Achse (9) an dem Ausgleichshebel (11) und die Schläuche der beiden Bowdenzüge (6, 7) für die Radbremsen der anderen Achse (10) am Fahrgestell abgestützt sind.

2. Bremsanlage nach Anspruch 1, dadurch gekennzeichnet, daß zwischen den Enden der Zugseile (15, 16, 17, 18) der vier Bowdenzüge (4, 5, 6, 7,) Spanner zum Einstellen der Vorspannung bzw. des Bremsspieles angeordnet sind.

3. Bremsanlage nach Anspruch 3, dadurch gekennzeichnet, daß die Spanner aus mit den Zugseilen (15, 16, 17, 18) verbundenen Gewindezapfen (19) und damit zusammenwirkenden Spannschrauben (20) mit Rechts- und Linksgewinde bestehen.

4. Bremsanlage nach den Ansprüche 1 bis 3, dadurch gekennzeichnet, daß die Abstützung der Schläuche am Fahrgestell aus einem an der hinteren Achse (10) befestigten Halter (12) mit einer Führung für das Bremsgestänge (3) besteht.

**Claims**

1. A brake system for trailers having two torsion bar or rubber spring axles and four individually sprung wheels, the braking force being transmitted to the wheel brakes, starting from an overrun device (1), via a brake linkage (3), a compensating lever (11) and Bowden cables (4, 5, 6, 7) branching therefrom, characterised in that :

   a)   the Bowden cables (4 and 7, 5 and 6) are interconnected diagonally via their wires (15 and 17, 16 and 18),

   b)   a two-armed compensating lever (11) is mounted at the end of the brake linkage (3) and

   c)   the casings of the two Bowden cables (4, 5) for the wheel brakes of one axle (9) are supported on the compensating lever (11) and the casings for the two Bowden cables (6, 7) for the wheel brakes of the other axle (10) are supported on the chassis.

2. A brake system according to claim 1, characterised in that tensioning means for adjusting the prestressing or brake clearance are dispose between the ends of the wires (15, 16, 17, 18) of the four Bowden cables (4, 5, 6, 7).

3. A brake system according to claim 3, characterised in that the tensioning means consist of screwthreaded pins (19) connected to the wires (15, 16, 17, 18) and right-hand and left-hand thread tensioning screws (20) co-operating with said pins.

4. A brake system according to claims 1 to 3, characterised in that the means for supporting the casings of the Bowden cables on the chassis consists of a holder (12) fixed on the back axle (10) and having a guide for the brake linkage (3).

**Revendications**

1. Installation de freinage pour remorques comportant deux essieux à barres de torsion ou à suspension caoutchouc, ainsi que quatre roues à suspension indépendante, la force de freinage étant transmise aux freins de roues, à partir d'un dispositif de commande par inertie (1), par l'intermédiaire d'une tringlerie de frein (3), d'un levier d'équilibrage (11) et d'éléments de commande Bowden (4, 5, 6, 7) partant de ce dernier, **caractérisée**

a)  en ce que les commandes Bowden (4 et 7, 5 et 6) sont reliées entre-elles de manière diagonale, par l'intermédiaire de leurs câbles de traction (15 et 17, 16 et 18),

b)  en ce qu'à l'extrémité de la tringlerie de frein (3) est monté un levier d'équilibrage (11) à deux bras, et

c)  en ce que les gaines des deux commandes Bowden (4, 5) pour les freins de roues d'un essieu (9) s'appuient sur le levier d'équilibrage (11), et les gaines des deux commandes Bowden (6, 7) pour les freins de roues de l'autre essieu (10) s'appuient sur le châssis.

2. Installation de freinage selon la revendication 1, caractérisée en ce qu'entre les extrémités des câbles de traction (15, 16, 17, 18) des quatre commandes Bowden (4, 5, 6, 7), sont montés des tendeurs destinés au réglage de la tension initiale et du jeu des freins.

3. Installation de freinage selon la revendication 2, caractérisée en ce que les tendeurs sont constitués par des embouts filetés (19) liés aux câbles de traction (15, 16, 17, 18) et coopérant avec des écrous tendeurs (20) avec filetage à pas à droite et à gauche.

4. Installation de freinage selon les revendications 1 à 3, caractérisée en ce que l'appui des gaines sur le châssis est constitué par un support (12) fixé sur l'essieu arrière (10) et comportant un guidage pour la tringlerie de frein (3).

Fig.1

Fig. 2

Fig. 3